# EUROPEAN PATENT SPECIFICATION

(11) **EP 4 306 334 B1**
(45) Date of publication and mention of the grant of the patent: **21.10.2026**
(21) Application number: 21929632.4
(22) Date of filing: 12.03.2021
(51) Int. Cl.: B60C 9/00, B60C 11/01, B60C 9/20

(54) **FLAT SPOT-PROOF TIRE, AND VEHICLE**
FLACHER PUNKTDICHTER REIFEN UND FAHRZEUG
PNEU ANTI-PLAT ET VÉHICULE

(43) Date of publication of application: 17.01.2024
(73) Proprietor: Zhejiang Geely Holding Group Co., Ltd., Hangzhou, Zhejiang 310051 (CN); Zhejiang Liankong Technologies Co., Ltd, Ningbo, Zhejiang 315336 (CN)
(72) Inventor: TANG, Lamei, Hangzhou Bay New District, Ningbo, Zhejiang 315336 (CN); XING, Xiangying, Hangzhou Bay New District, Ningbo, Zhejiang 315336 (CN)
(74) Representative: Zaboliene, Reda
(86) International application number: PCT/CN2021/080483
(87) International publication number: WO 2022/188158

(56) References cited:
- EP-A1- 0 466 998
- EP-A2- 1 559 590
- CN-A- 1 820 973
- CN-A- 103 547 462
- CN-A- 103 568 731
- CN-A- 110 770 039
- CN-U- 210 416 096
- JP-A- 2008 296 814
- US-A- 5 656 108
- US-A- 5 665 785
- US-A1- 2004 256 044
- US-A1- 2010 289 232
- US-A1- 2016 288 573
- US-A1- 2019 184 749
- US-A1- 2020 198 400

## Description

### TECHNICAL FIELD

The present invention relates to vehicle tire technologies, in particular to a flat-spot-proof tire and a vehicle having the same.

### BACKGROUND

Due to viscoelastic properties of rubber materials, traditional tires are prone to flat spots at their stress mark points during exporting vehicles from main engine factories under long-term local stress conditions. According to the duration of sea transportations and the thermal and light environments, flat spots have short-term and long-term effects. Generally, the short-term flat spots can be eliminated, while the long-term flat spots cannot be eliminated.

In the related technologies, the design of tires can avoid some short-term flat spots by selecting fiber materials of the carcass, but does not have good effect on long-term flat spots, while the long-term flat spots can easily lead to vehicle jitter during high-speed traveling.

EP 1559590A2 disclose a tire noise reducing system comprises a pneumatic tire (2) with a hollow, a wheel rim (3) on which the tire is mounted so that said hollow forms a closed cavity (4), and a noise damper (5) disposed in the closed cavity, wherein the noise damper is formed by fixing a strip of a porous material to the tire or wheel rim, the noise damper (5) has a volume in a range of from 0.4 to 20 % of the volume of the cavity (4), the noise damper has a sectional shape substantially constant in the tire circumferential direction, and the pneumatic tire comprises a tread portion (2t) provided with tread grooves (G1-G4) defining a tread pattern having a sea ratio of 20 to 35%.

JP 2008296814A discloses a pneumatic tire. In the pneumatic tire 1, the pneumatic tire in which inner liners 13, 14 different at left and right sides in an axial direction of the tire are arranged is attached so as to position the right side of the tire 1 at both outer sides of the vehicle. Tensile modulus in a tire circumferential direction of the right side inner liner 13 is larger than the tensile modulus in a tire axial direction, and the tensile modulus in the tire axial direction of the left side inner liner 14 is made larger than the tensile modulus in the tire circumferential direction. EP0466998 A1 disclose a tire treads (11) comprising an uneven number of axially spaced straight grooves (400-404) which extend circumferentially about the tire (10), the center groove (402) having its centerline on the equatorial plane (EP), and a plurality of circumferentially spaced laterally extending grooves (430-435), the axially innermost grooves (431-434) forming with the equatorial plane an angle comprised between 30 DEG and 60 DEG , the two axially outermost grooves (430, 435) forming with the equatorial plane an angle comprised between 60 DEG and 80 DEG . The circumferentially and laterally extending grooves define rows of land portions having the shape of a large parallelogram adjacent to a small parallelogram. The small parallelogram has one of his small sides in the continuation of one of the sides of the large parallelogram delimiting a circumferentially extending groove (400-404). The length of the small side of the small parallelogram is changed in order to modify the performance characteristics of the tire.

### SUMMARY

The present invention is proposed to solve the technical problems that the tires are prone to long-term flat spot effect in the related art.

In order to solve the technical problems, the present invention discloses a flat-spotproof tire, as defined in claim 1, which includes a tread, a cap ply, a belt ply, and a carcass;

A rubber hardness of the tread is in a range from 74 to 78 Shore A;

The cap ply is made of nylon cords having a linear density of 90 to 140 pieces per100mm;

The belt ply is made of steel cords being selected from HT steel wires and SHT steel wires;

The carcass is made of polyester cords having a linear density of 100 to 120 pieces per 100mm.

A ground clearance of a shoulder of the flat-spot-proof tire is in a range from 6.5 to 8.5 millimeters.

In some embodiments, the flat-spot-proof tire also includes a bead filler having a rubber hardness of 74 to 90 Shore A.

In some embodiments, a height of the bead filler is in a range from 25 to 35 millimeters.

In some embodiments, the nylon cords are PA66 wires having a fineness of 930 deniers and a linear density of 134 pieces per 100mm.

In some embodiments, the steel cords are HT steel wires having a diameter of 0.25 millimeters, and the HT steel wires are twisted into 2+2 * 0.25HT strands.

In some embodiments, the polyester cord are PET wires having a fineness of 1500 deniers and a linear density of 118 pieces per 100mm.

In some embodiments, the nylon cords are PA66 wires having a fineness of 1200 deniers and a linear density of 97 pieces per 100mm.

The present document also discloses a vehicle, which includes any one of the aforementioned flat-spot-proof tires.

By means of the abovementioned technical solutions, the flat-spot-proof tire and the vehicle in the present document have the following advantages:

The flat-spot-proof tire and the vehicle of the present document use suitable industrial rubber and fiber polyester materials, have a specific size design and an optimized inflation process after vulcanization, such that the long-term flat spot effect of the tire can be mitigated, and the jitter of the vehicle during high-speed traveling can be reduced.

### BRIEF DESCRIPTION OF THE DRAWINGS

In order to clearly explain of the technical solutions in the embodiments of the present invention, the following will give a brief introduction of the accompany drawings required in the description of the embodiments. Obviously, the accompany drawings in the following description only show some of the embodiments in the present invention.

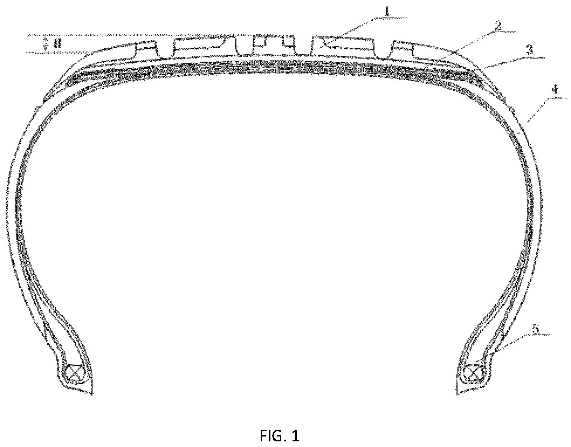

FIG. 1 is a schematic structural diagram of a flat-spot-proof tire in an embodiment of the present invention.

### DETAILED DESCRIPTION OF PREFERRED EMBODIMENTS

The following will provide a clear and complete description of the technical solution in the embodiments of the present invention in conjunction with the accompanying drawings.

The term 'one embodiment' or 'embodiment' refers to a specific feature, structure, or characteristic that can be included in at least one implementation of the present document. In the description of the present document, it should be understood that the terms "up", "down", "top", "bottom", and etc. indicate the orientation or position relationship based on the orientation or position relationship shown in the attached drawings, only for the convenience of describing the present document and simplifying the description, rather than indicating or implying that the device or element must have a specific orientation, be constructed and operated in a specific orientation, and therefore cannot be understood as a limitation of the present document. In addition, the terms "first" and "second" are only used to describe and cannot be understood as indicating or implying the importance or inherently indicating the quantity of the technical features. Therefore, the features limited by "first" and "second" can explicitly or implicitly include one or more of these features. Moreover, the terms "first", "second", and etc. are used to distinguish similar objects without describing a specific order or sequence. It should be understood that the data used in this way can be interchanged in appropriate cases, so that the embodiments of the present document can be implemented in an order other than those illustrated or described here.

Please refer to FIG.1, which is a structural schematic diagram of an optional flat-spot-proof tire in an embodiment of the present invention. FIG.1 shows a tread 1, a cap ply 2, a belt ply 3, a carcass 4, a bead filler 5, and a ground clearance H of a tire shoulder.

The flat-spot-proof tire and the vehicle in embodiments of the present document use suitable industrial rubber and fiber polyester materials, have a specific size design, and an optimized inflation process after vulcanization, such that the long-term flat spot effect of the tire can be mitigated, and the jitter of the vehicle during high-speed traveling can be reduced.

In the present invention, a rubber hardness of the tread 1 is in a range from 74 to78 Shore A; The cap ply 2 is made of nylon cords, and a linear density of the nylon cords is in a range from 90 to 140 pieces per 100mm; The belt ply 3 is made of steel cords, and the steel cords are selected from a group consisting of HT steel wires and SHT steel wires; The carcass 4 is made of polyester cords, and a linear density of the polyester cords is in a range from 100 to 120 pieces per 100mm.

In some embodiments, a rubber hardness of the bead filler 5 shown in FIG.1 is in a range from 74 to 90 Shore A.

In some embodiments, a height of the bead filler 5 shown in FIG.1 is in a range from 25 to 35 millimeters.

According to the invention, the ground clearance H of the tire shoulder shown in FIG.1 is in a range from 6.5 to 8.5 millimeters.

In some embodiments, a vulcanization time of the flat-spot-proof tire is in a range from 16 to 18 minutes, and an inflation pressure after vulcanization is in a range from 1.2 to1.4 bar.

In some embodiments, the nylon cords are PA66 wires. A fineness of the nylon cords is 930 deniers and a linear density of the nylon cords is 134 pieces per 100mm.

In some embodiments, the steel cords are HT steel wires. A diameter of the HT steel wires is 0.25 millimeters, and the HT steel wires are twisted into 2+2*0.25HT strands.

In some embodiments, the polyester cords are PET wires. A fineness of the PET wires is 1500 deniers and a linear density of the PET wires is 118 pieces per 100mm.

In some embodiments, the nylon cords are PA66 wires. A fineness of the PA66 wires is 1200 deniers and a linear density of the PA66 wires is 97 pieces per 100mm.

The following is an explanation of the flat-spot-proof tire in specific examples.

### Example 1, which is not according to the present invention:

The rubber hardness of the tread 1 is 68 Shore A. The cap ply 2 is made of PA66 nylon cords, with a fineness of 930 deniers and a linear density of 97 pieces per 100mm. The belt ply 3 is made of HT steel wires with a diameter of 2.3mm, and the HT steel wires are twisted into 1*2*2.30HT strand. The carcass 4 is made of PET polyester cords, with a fineness of 1000 deniers and a linear density of 100 pieces per 100mm. The rubber hardness of the bead filler 5 is 88 Shore A, and the height of the bead filler 5 is 25 millimeters. The ground clearance of the tire shoulder is 6.5 millimeters. The vulcanization time of the tire is 16 minutes, and the inflation pressure after vulcanization is 1.2 bar.

### Example 2, which is not according to the present invention:

The rubber hardness of the tread 1 is 70 Shore A. The cap ply 2 is made of PA66 nylon cords, with a fineness of 930 deniers and a linear density of 134 pieces per 100mm. The belt ply 3 is made of HT steel wires with a diameter of 0.25mm, and the HT steel wires are twisted into 2+2*0.25HT strand. The carcass 4 is made of PET polyester cords, with a fineness of 1500 deniers and a linear density of 118 pieces per 100mm. The rubber hardness of the bead filler 5 is 74 Shore A, and the height of the bead filler 5 is 30 millimeters. The ground clearance of the tire shoulder is 8.5 millimeters. The vulcanization time of the tire is 18 minutes, and the inflation pressure after vulcanization is 1.4 bar.

### Example 3:

The rubber hardness of the tread 1 is 74 Shore A. The cap ply 2 is made of PA66 nylon cords, with a fineness of 930 deniers and a linear density of 134 pieces per 100mm. The belt ply 3 is made of HT steel wires with a diameter of 2.3mm, and the HT steel wires are twisted into 1*2*2.30HT strand. The carcass 4 is made of PET polyester cords, with a fineness of 1500 deniers and a linear density of 118 pieces per 100mm. The rubber hardness of the bead filler 5 is 74 Shore A, and the height of the bead filler 5 is 30 millimeters. The ground clearance of the tire shoulder is 6.5 millimeters. The vulcanization time of the tire is 18 minutes, and the inflation pressure after vulcanization is 1.4 bar.

### Example 4:

The rubber hardness of the tread 1 is 78 Shore A. The cap ply 2 is made of PA66 nylon cords, with a fineness of 1200 deniers and a linear density of 97 pieces per 100mm. The belt ply 3 is made of HT steel wires with a diameter of 2.3mm, and the HT steel wires are twisted into 1*2*2.30HT. The carcass 4 is made of PET polyester cords, with a fineness of 1000 deniers and a linear density of 100 pieces per 100mm. The rubber hardness of the bead filler 5 is 74 Shore A, and the height of the bead filler 5 is 35 millimeters. The ground clearance of the tire shoulder is 8.5 millimeters. The vulcanization time of the tire is 18 minutes, and the inflation pressure after vulcanization is 1.4 bar.

Table 1 shows z-jitter data of a steering wheel after vehicle tires manufactured by the techniques of Examples 1 to 4 generate flat spot. In Table 1, the tires being manufactured by the technique of Example 2 have the best performance. In the test of z-jitter data of the steering wheel after flat spot, the average data corresponding to the tires using the technique of Example 2 is 6.95m/s, while the average data corresponding to the tires using the technique of Example 1 is 8.21m/s.

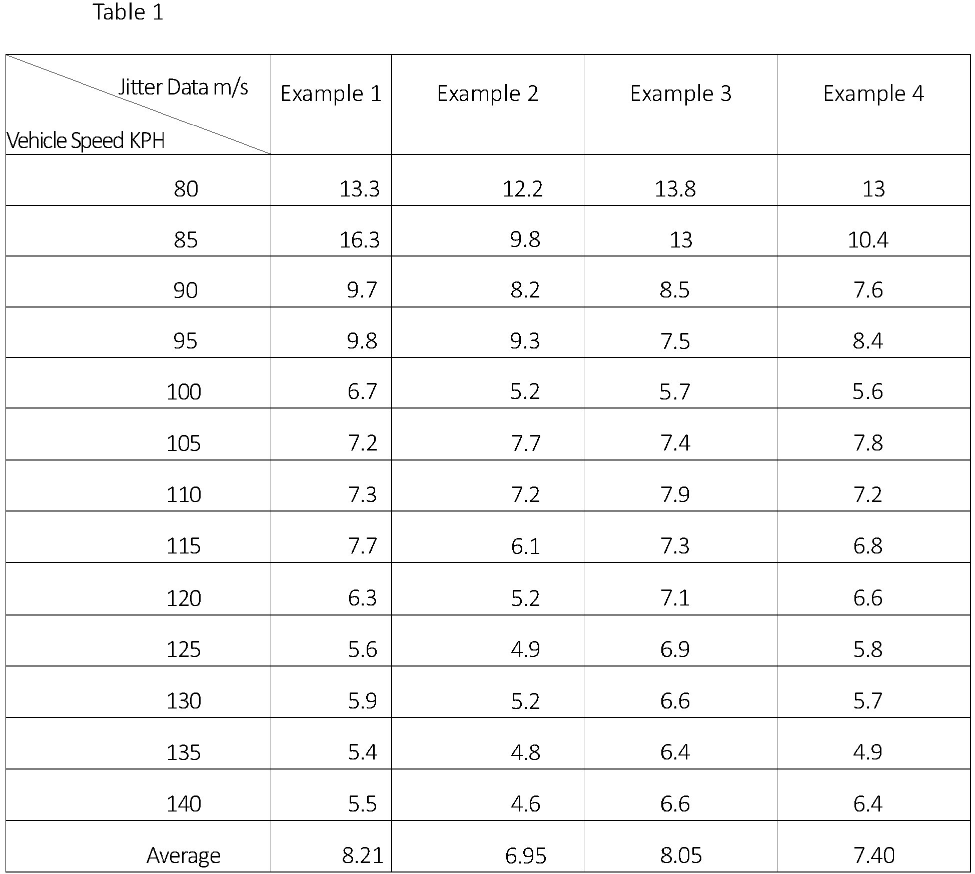

The embodiments of the present invention also provide a vehicle, which includes any one of the abovementioned flat-spot-proof tires.

The flat-spot-proof tire of the embodiments of the present invention has the following advantages:
The flat-spot-proof tire and the vehicle of the embodiments of the present invention use suitable industrial rubber and fiber polyester materials, have a specific size design, and an optimized inflation process after vulcanization, such that the long-term flat spot effect of the tire can be mitigated, and the jitter of the vehicle during high-speed traveling can be reduced.

## Claims

1. A flat-spot-proof tire, comprising: a tread (1), a cap ply (2), a belt ply (3), and a carcass (4),
**characterized in that**
a rubber hardness of the tread (1) is in a range from 74 to 78 Shore A;
the cap ply (2) is made of nylon cords having a linear density of 90 to140 pieces per 100mm;
the belt ply (3) is made of steel cords being selected from HT steel wires and SHT steel wires;
the carcass (4) is made of polyester cords having a linear density of 100 to 120 pieces per 100mm;
a ground clearance of a shoulder of the flat-spot-proof tire is in a range from 6.5 to 8.5 millimeters.

2. The flat-spot-proof tire according to claim 1, wherein the flat-spot-proof tire further comprises a bead filler (5) having a rubber hardness of 74 to 90 Shore A.

3. The flat-spot-proof tire according to claim 2, wherein a height of the bead filler (5) is in a range from 25 to 35 millimeters.

4. The flat-spot-proof tire according to claim 1, wherein the nylon cords are PA66 wires having a fineness of 930 deniers and a linear density of 134 pieces per 100mm.

5. The flat-spot-proof tire according to claim 1, wherein the steel cords are HT steel wires having a diameter of 0.25 millimeters and being twisted into 2+2*0.25HT strands.

6. The flat-spot-proof tire according to claim 1, wherein the polyester cords are PET wires having a fineness of 1500 deniers and a linear density of 118 pieces per 100mm.

7. The flat-spot-proof tire according to claim 1, wherein the nylon cords are PA66 wires having with a fineness of 1200 deniers and a linear density of 97 pieces per 100mm.

8. A vehicle, comprising a flat-spot-proof tire as claimed in any one of claims 1 to 7.

## Patentansprüche

1. Standplattenfester Reifen, umfassend: eine Lauffläche (1), eine Decklage (2), eine Gürtellage (3) und eine Karkasse (4),
**dadurch gekennzeichnet, dass**
eine Gummihärte der Lauffläche (1) in einem Bereich von 74 bis 78 Shore A liegt,
dass die Decklage (2) aus Nylonkorden mit einer linearen Dichte von 90 bis 140 Stück pro 100 mm besteht,
dass die Gürtellage (3) aus Stahlkorden besteht, die aus HT-Stahldrähten und SHT-Stahldrähten ausgewählt sind,
dass die Karkasse (4) aus Polyesterkorden mit einer linearen Dichte von 100 bis 120 Stück pro 100 mm besteht,
und dass eine Bodenfreiheit einer Schulter des standplattenfesten Reifens in einem Bereich von 6,5 bis 8,5 Millimetern liegt.

2. Standplattenfester Reifen nach Anspruch 1, wobei der standplattenfeste Reifen ferner einen Wulstfüller (5) mit einer Gummihärte von 74 bis 90 Shore A umfasst.

3. Standplattenfester Reifen nach Anspruch 2, wobei eine Höhe des Wulstfüllers (5) in einem Bereich von 25 bis 35 Millimetern liegt.

4. Standplattenfester Reifen nach Anspruch 1, wobei es sich bei den Nylonkorden um PA66-Drähte mit einer Feinheit von 930 Denier und einer linearen Dichte von 134 Stück pro 100 mm handelt.

5. Standplattenfester Reifen nach Anspruch 1, wobei es sich bei den Stahlkorden um HT-Stahldrähte mit einem Durchmesser von 0,25 Millimetern handelt, die zu 2+2*0,25HT-Litzen verdrillt sind.

6. Standplattenfester Reifen nach Anspruch 1, wobei es sich bei den Polyesterkorden um PET-Drähte mit einer Feinheit von 1500 Denier und einer linearen Dichte von 118 Stück pro 100 mm handelt.

7. Standplattenfester Reifen nach Anspruch 1, wobei es sich bei den Nylonkorden um PA66-Drähte mit einer Feinheit von 1200 Denier und einer linearen Dichte von 97 Stück pro 100 mm handelt.

8. Fahrzeug, das einen standplattenfesten Reifen gemäß einem der Ansprüche 1 bis 7 umfasst.

## Revendications

1. Pneu résistant à l'aplatissement, comprenant : une bande de roulement (1), une nappe sommet (2), une nappe ceinture (3) et une carcasse (4),
**caractérisé en ce que**
une dureté de caoutchouc de la bande de roulement (1) est comprise dans une plage allant de 74 à 78 Shore A ;
la nappe sommet (2) est faite de câblés en nylon présentant une densité linéaire de 90 à 140 pièces par 100 mm ;
la nappe ceinture (3) est faite de câblés d'acier qui sont choisis parmi des fils d'acier HT et des fils d'acier SHT ;
la carcasse (4) est faite de câblés en polyester présentant une densité linéaire de 100 à 120 pièces par 100 mm ;
une garde au sol d'un épaulement du pneu résistant à l'aplatissement est comprise dans une plage allant de 6,5 à 8,5 millimètres.

2. Pneu résistant à l'aplatissement selon la revendication 1, dans lequel le pneu résistant à l'aplatissement comprend en outre un bourrage sur tringle (5) présentant une dureté de caoutchouc de 74 à 90 Shore A.

3. Pneu résistant à l'aplatissement selon la revendication 2, dans lequel une hauteur du bourrage sur tringle (5) est comprise dans une plage allant de 25 à 35 millimètres.

4. Pneu résistant à l'aplatissement selon la revendication 1, dans lequel les câblés en nylon sont des fils PA66 présentant une finesse de 930 deniers et une densité linéaire de 134 pièces par 100 mm.

5. Pneu résistant à l'aplatissement selon la revendication 1, dans lequel les câblés d'acier sont des fils d'acier HT présentant un diamètre de 0,25 millimètre et qui sont torsadés en torons 2+2*0,25HT.

6. Pneu résistant à l'aplatissement selon la revendication 1, dans lequel les câblés en polyester sont des fils PET présentant une finesse de 1 500 deniers et une densité linéaire de 118 pièces par 100 mm.

7. Pneu résistant à l'aplatissement selon la revendication 1, dans lequel les câblés en nylon sont des fils PA66 présentant une finesse de 1 200 deniers et une densité linéaire de 97 pièces par 100 mm.

8. Véhicule comprenant un pneu résistant à l'aplatissement selon l'une quelconque des revendications 1 à 7.
